# EUROPÄISCHE PATENTSCHRIFT

(11) **EP 3 647 767 B1**
(45) Veröffentlichungstag und Bekanntmachung des Hinweises auf die Patenterteilung: **25.09.2024**
(21) Anmeldenummer: 18203264.9
(22) Anmeldetag: 30.10.2018
(51) Int. Cl.: G01N 15/14, G01N 1/44, G01N 33/49

(54) **ISOVOLUMETRISCHES AUFKUGELN VON ROTEN BLUTZELLEN**
ISOVOLUMETRIC BALLING OF RED BLOOD CELLS
EMBILLAGE ISOVOLUMÈTRIQUE DE CELLULES DE SANG ROUGES

(43) Veröffentlichungstag der Anmeldung: 06.05.2020
(73) Patentinhaber: Siemens Healthineers AG, 91301 Forchheim (DE)
(72) Erfinder: Richter, Lukas, 96114 Hirschaid (DE); Rührig, Manfred, 91207 Lauf a.d. Pegnitz (DE); Wagner, Ann-Kathrin, 91052 Erlangen (DE); Hörnig, Gabriele, 90766 Fürth (DE); Matheis, Karl-Philipp, 55232 Alzey (DE); Schmidt, Oliver, 91052 Erlangen (DE); Ugele, Matthias, 84028 Landhut (DE)
(74) Vertreter: Siemens Healthineers Patent Attorneys

(56) Entgegenhaltungen:
- WO-A1-2008/009311
- WO-A1-2018/005984
- WO-A1-2018/022158
- US-A1- 2013 171 685
- US-A1- 2017 184 486
- N MATSUMOTO ET AL: "Association of decreased membrane protein phosphorylation with red blood cell spherocytosis", BLOOD, 1 February 1977 (1977-02-01), United States, pages 233, XP055579903, Retrieved from the Internet <URL:http://www.bloodjournal.org/content/bloodjournal/49/2/233.full.pdf> [retrieved on 20190411]
- GIOVANNA TOMAIUOLO: "Biomechanical properties of red blood cells in health and disease towards microfluidics", BIOMICROFLUIDICS., 3 September 2014 (2014-09-03), XP055579789, Retrieved from the Internet <URL:https://www.ncbi.nlm.nih.gov/pmc/articles/PMC4189537/> [retrieved on 20190410], DOI: 10.1063/1.4895755
- HEMANTH JAGANNATHAN ET AL: "Ultrasonic temperature control and measurement in microfluidic channels", PROCEEDINGS OF SPIE MEDICAL IMAGING 1997, vol. 4982, 25 January 2003 (2003-01-25), 1000 20th St. Bellingham WA 98225-6705 USA, pages 243 - 247, XP055579871, ISSN: 0277-786X, ISBN: 978-1-5106-2781-9, DOI: 10.1117/12.478162

## Beschreibung

Die Erfindung liegt auf dem Gebiet der automatischen Analyzer und betrifft einen Hämatologie-Analyzer zum Analysieren von Zellen in einer Probe. Die Zellen werden dabei vor der Analyse mittels piezoelektrischen Heizens erwärmt und isovolumetrisch aufgekugelt.

Zur automatisierten Analyse von Zellen werden automatisierte Zellzählgeräte (automated cell counters) mit zunehmendem Erfolg angewendet. Beispiele hierfür sind das Advia 2120, Sysmex XE-2100, CellaVision DM96 sowie CellaVision DM1200 Gerät. Diese automatisierten Geräte stellen, abgesehen von ihrer hohen Durchsatzzahl, einige Vorteile bereit, wie beispielsweise hohe Objektivität (keine Variabilität abhängig vom Beobachter), Elimination statistischer Variationen, die üblicherweise mit einer manuellen Zählung verbunden sind (Zählung hoher Zellzahlen), sowie die Bestimmung zahlreicher Parameter, die bei einer manuellen Auszählung nicht verfügbar wären und, wie angesprochen eine effizientere und kosteneffektivere Handhabung. Einige dieser Geräte können 120 bis 150 Patientenproben pro Stunde bearbeiten.

Die technischen Prinzipien der automatischen Einzelzellzählung beruhen meist entweder auf einer Impedanz- (Widerstands- ) Messung oder auf einem optischen System (Streulicht- bzw. Absorptionsmessung). Weiter sind bildgebende Systeme etabliert, die z.B. Zellen eines Blutausstrichs automatisiert abbilden und bewerten.

Beim Impedanzverfahren erfolgt die Zellzählung sowie deren Größenbestimmung auf Grundlage des Nachweises und der Messung von Veränderungen in der elektrischen Leitfähigkeit (Widerstand), die durch ein Teilchen verursacht werden, das sich durch eine kleine Öffnung hindurchbewegt. Teilchen, wie beispielsweise Blutzellen, sind selbst nicht leitend, werden jedoch in einem elektrisch leitenden Verdünnungsmittel suspendiert. Wenn eine derartige Suspension von Zellen durch eine Öffnung hindurchgeleitet wird, nimmt bei Durchgang einer einzelnen individuellen Zelle die Impedanz (Widerstand) des elektrischen Weges zwischen den beiden Elektroden, die sich auf jeder Seite der Öffnung befinden, vorübergehend zu.

Im Gegensatz zum Impedanzverfahren umfasst das optische Verfahren das Durchleiten eines Laserlichtstrahles oder eines LED Lichtstrahls durch eine verdünnte Blutprobe, die in einem kontinuierlichen Strom von dem Laserstrahl oder dem LED Lichtstrahl erfasst wird. Der entsprechende Lichtstrahl kann dabei z.B. mittels eines Lichtwellenleiters zur Durchflusszelle geleitet werden. Jede Zelle, die durch die Erfassungszone der Durchflusszelle hindurchtritt, streut das fokussierte Licht. Das gestreute Licht wird dann durch einen Fotodetektor nachgewiesen und in einen elektrischen Impuls umgewandelt. Die hier erzeugte Anzahl von Impulsen ist direkt zur Zellanzahl proportional, die durch die Erfassungszone in einer speziellen Zeitspanne hindurchtritt.

Bei den optischen Verfahren wird die Lichtstreuung der einzelnen Zelle, die durch die Erfassungszone hindurchtritt, in verschiedenen Winkeln gemessen. Hierdurch wird das Streuverhalten der jeweiligen Zelle für die optische Strahlung erfasst, das Rückschlüsse auf z.B. die Zellstruktur, Form und Reflexionsvermögen erlaubt. Dieses Streuverhalten kann dazu verwendet werden, verschiedene Arten von Blutzellen zu differenzieren und die abgeleiteten Parameter zur Diagnose von Abweichungen der Blutzellen dieser Probe von einer Norm, die z.B. aus einer Vielzahl von als normal klassifizierten Referenzproben gewonnen wurde, zu verwenden.

Bei der automatisierten Bewertung von Zellen in z.B. Blutausstrichen arbeiten die heutigen Analysatoren mit Mikroskopen mit einer hohen numerischen Apertur und mit Immersion zwischen dem Objektträger und dem Objektiv, um eine hohe Auflösung erreichen zu können. Dadurch ergibt sich jedoch eine vergleichsweise geringe Tiefenschärfe, die deutlich geringer ist als die Dicke der Zellen senkrecht zur Fläche des Objektträgers mit dem Blutausstrich. Entsprechend kann mit einer zweidimensionalen Abbildung in nur einer Fokuseinstellung nicht die gesamte Tiefeninformation der Zelle scharf abgebildet werden. Häufig kommt es daher zu unklar klassifizierten Blutzellen, die Fachpersonal, z.B. ein Laborarzt, manuell nachklassifizieren muss.

Die momentan gebräuchlichen Messgeräte in der Hämatologie umfassen bezüglich des optischen Systems ein Mikroskop mit etwa 100-facher Vergrößerung mit effektiven lateralen Auflösungen eines Sensorelements auf der Objektebene von 100 nm = 0,1 µm. Die gebräuchlichen Kameras haben Pixelzahlen von max. 0,3 bis 1 Millionen Pixeln. Dadurch ist das Gesichtsfeld im Objekt nur wenige 100 µm groß. Um den gefärbten Ausstrich einer Blutprobe, der einige mm breit und mehrere 10 mm lang sein kann, aufnehmen und analysieren zu können, muss dann die Fläche des zu analysierenden Bereichs des Ausstriches mit einer Verschiebeeinheit in einem Mäanderscanverfahren abgetastet werden. Um den Prozess etwas zu beschleunigen wird ein erster flächenhafter Scan mit geringer Vergrößerung, z.B. 10-fach mit entsprechend 10-fach größerem Gesichtsfeld durchgeführt und nach einer ersten Bildauswertung zum Auffinden der zu vermessenden Zellen werden dann nur die Regions of Interest (RoI) mit den Zellen mit der höheren Vergrößerung anschließend gezielt angefahren. Das bedeutet, dass eine vollständige flächenhafte Analyse der Probe mit der hohen Vergrößerung nicht erfolgt. Um die Zellen hinreichend gut sichtbar zu machen um sie mit der hochauflösenden optischen Mikroskopie analysieren zu können, werden die Blutausstriche in einem vorgelagerten Schritt angefärbt. Es haben sich mehrere Färbeprotokolle weltweit etabliert, die sich global gesehen teilweise von Region zu Region unterscheiden. Somit ist die Vergleichbarkeit der Analyse von Blutausstrichen regional begrenzt, da nur Bilder von Zellen gut miteinander verglichen werden können, die nach demselben Protokoll angefärbt worden sind.

Für die Analyse von roten Blutzellen (RBC) werden diese insbesondere in Durchflusssystemen aufgerundet, wobei dieser Vorgang wird auch als Aufkugeln bezeichnet wird.

Das Aufrunden bzw. Aufkugeln von nativen biconkaven roten Blutzellen ermöglicht eine genaue Analyse deren Volumens und weiterer Parameter mit Hilfe geometrischer Formeln, siehe dazu z.B. Y. C. B. Fung und P. Tong "Theory of the sphering of red blood cells", Biophysical Journal, Volume 8 (1968).

Der Prozess des Aufkugelns soll dabei in der Praxis gut in einen komplexen Probenaufbereitungsprozess, wie er bei einem Hämatologieautomaten typischerweise vorliegt, integrierbar sein, um einen raschen Workflow und gleichzeitig einen hohen Durchsatz von Proben zu erzielen.

Das isovolumetrische Aufkugeln wird in bekannten Hämatologie-Analysatoren angewendet indem die Probe mit einem hypotonen Puffer versetzt wird, der häufig zusätzlich ein die Zellmembran destabilisierenden Agens wie z.B. Sodiumdodecylsulfat(SDS) enthält. Der Einsatz hypotoner Flüssigkeiten zur Aufkugelung resultiert dabei in einer sehr hohen Verdünnung der Probe um z.B. einen Faktor 630. Weiter führt dieses Vorgehen zur isovolumetrischen Aufkugelung dazu, dass die roten Blutzellen sich in einem Zustand befinden, der sich hochgradig von einem nativen Zustand unterscheidet. Dazu kann auch die Kombination der hypotonen Flüssigkeit und des die Zellmembran destabilisierenden Agens besonders beitragen.

Die Analyse dieser aufgekugelten Zellen umfasst z.B. eine Bestimmung ihres Volumens oder des Hämoglobins und erfolgt in Hämatologie-Analysatoren z.B. optisch durch Einsatz monochromatischen Lichts, welches durch Laser oder LED erzeugt wird sowie die Anwendung der Mie-Theorie zur Auswertung spherischer Objekte. Alternativ können die aufgekugelten Zellen auch z.B. impedimetrisch durch Messung der Leitfähigkeit in einem definierten Volumen einer Ionen enthaltenden Flüssigkeit analysiert werden (Coulter-Prinzip).

Es sind auch Methoden bekannt in denen Hitze in Form eines entsprechend temperierten Wasserbads eingesetzt wird, um rote Blutzellen aufzukugeln, siehe dazu z.B. N. Matsumoto, Y. Yawata and H. S. Jocob "Association of Decreased Membrane Protein Phosphorylation With Red Blood Cell Spherocytosis", Blood, Volume 49, No. 2 (February) (1977). Hierbei kann teilweise eine sehr hohe Verdünnung der Probe entfallen. Jedoch kommt es aufgrund der Erwärmung sehr leicht zu weiteren Veränderungen an den roten Blutzellen, wie z.B. einer Agglutination der Proteine in und an den Blutzellen, wodurch sich die Morphologie der roten Blutzellen auf Grund einer Überhitzung sehr stark verändert und eine entsprechende, präzise Analyse der Zellen unmöglich macht.

Weiter ist es für eine bildgebende Analyse notwendig,
die aufgekugelten roten Blutzellen in den optischen Fokus eines Mikroskops zu bringen, um anschließend eine präzise Bildanalyse zu ermöglichen.

Eine der Erfindung zugrundeliegende Aufgabe ist somit das Bereitstellen eines automatischen Analyzers zum Analysieren einer medizinischen Probe sowie eines Verfahrens zum Aufkugeln einer Zelle einer medizinischen Probe, wobei die Aufkugelung der Zelle ohne eine sehr hohe Verdünnung der Probe erreicht werden kann und gleichzeitig die Zellen in einem möglichst ursprünglichen und wenig oder überhaupt nicht veränderten Zustand, abgesehen von der Aufkugelung, analysiert werden können, also z.B. chemische Vorbehandlungen der Zelle weitest möglichst unterbleiben sollen und idealerweise vollständig auf eine Markierung der Zellen verzichtet werden kann. Weiter sollen auch die Nachteile, die sich bei den bekannten Methoden, die Hitze zur Aufkugelung einsetzten ergeben, vermieden werden. So soll z.B. eine Agglutination der Proteine in und an den Zellen und eine hierdurch hervorgerufene Änderung der Morphologie aufgrund einer Überhitzung vermieden werden. Weiter ist es eine Aufgabe der Erfindung, die entsprechend schonend und markierungsfrei aufgekugelten Zellen in den optischen Fokus eines Mikroskops zu bringen, um anschließend eine präzise Bildanalyse zu ermöglichen.

Die Aufgabe wird von einem erfindungsgemäßen Verfahren gemäß des unabhängigen Patentanspruchs gelöst. Vorteilhafte Weiterbildungen der Erfindung sind insbesondere auch durch die Unteransprüche gegeben.

Die vorliegende Offenbarung umfasst insbesondere einen nicht beanspruchten Analyzer zum Analysieren einer medizinischen Probe, der Analyzer umfassend eine Analysezelle für die Probe, ein Piezoelement und eine Analysevorrichtung, wobei das Piezoelement durch Anlegen einer Spannung und einer Frequenz betrieben werden kann und dabei ein akustisches Wellenfeld generiert, wobei eine sich in der Analysezelle befindende Probe bei Betrieb des Piezoelements in dem akustischen Wellenfeld befindet.

Dieser Analyzer hat den Vorteil, dass auf den bisher notwendigen Einsatz von hypotonen Puffern und ein die Zellmembran destabilisierenden Agens zum aufkugeln der Zellen verzichtet werden kann. Weiter ist eine sehr hohe Verdünnung der Probe nicht länger nötig und es werden gleichzeitig auch die Nachteile, die sich bei einer herkömmlichen Erhitzung mittels eines Wasserbades ergeben, weitestgehend vermieden. Weiter können die aufgekugelten Zellen mittels des erzeugten akustischen Wellenfeldes und der entsprechenden akustischen Kräfte gleichzeitig auch in den optischen Fokus eines Mikroskops gebracht und/oder gehalten werden, um anschließend eine präzise Bildanalyse zu ermöglichen. Weiter kann auf eine Färbung oder sonstige Markierung der Proben für die anschließende Mikroskopie vollständig oder teilweise verzichtet werden. Bevorzugt handelt es sich bei dem Analysator um einen automatischen Analysator, besonders bevorzugt um einen teilautomatischen oder vollautomatischen Analysator. Weiter handelt es sich bei dem Analyzer bevorzugt um einen Hämatologie-Analyzer, besonders bevorzugt um einen automatischen Hämatologie-Analyzer.

In einer bevorzugten Ausführungsform des Analyzers wird eine sich in der Analysezelle befindende Probe bei Betrieb des Piezoelements durch das Wellenfeld erwärmt, bevorzugt auf mindestens 48 Grad Celsius, besonders bevorzugt auf mindestens 50 Grad Celsius. Dies hat den Vorteil, dass zuverlässig eine vollständige Aufkugelung von roten Blutzellen erreicht werden kann.

In einer bevorzugten Ausführungsform des Analyzers wird das Piezoelement durch Anlegen einer Spannung von 35 Volt bis 100 Volt, bevorzugt 40 bis 80 Volt, besonders bevorzugt von 75 Volt und einer Frequenz von etwa 1 MHz, bevorzugt 1,113 MHz, oder einer Frequenz von etwa 5 MHz, bevorzugt 5,397 MHz betrieben. Dies hat den Vorteil, dass eine sich in der Analysezelle befindende Zelle einer medizinischen Probe besonders sicher, schnell und effizient auf eine Temperatur von 48 oder 50 Grad Celsius erwärmt werden kann.

In einer weiteren bevorzugten Ausführungsform des Analyzers handelt es sich bei der Analysezelle um eine Durchflusszelle, bevorzugt um eine mikrofluidische Durchflusszelle. Dies hat den Vorteil, dass ein optimierter Workflow und ein hoher Durchsatz von Proben erreicht werden kann. Weiter hat dies den Vorteil, dass die Zellen in einer flüssigen Umgebung und damit unter nativeren Bedingungen analysiert werden kann. Bevorzugt bewegt sich die Probe innerhalb der Analysezelle mit einer Durchflussgeschwindigkeit zwischen 0,002 und 5 mm pro Sekunde, besonders bevorzugt zwischen 0,002 und 0,1 mm pro Sekunde bewegt. Dabei sind die Flussbedingungen vorteilhafterweise laminar.

In einer weiteren bevorzugten Ausführungsform des Analyzers umfasst die Analysevorrichtung ein optisches Mikroskop, bevorzugt ein digitales holographisches Mikroskop (DHM) zur Analyse einer sich in der Analysezelle befindenden Probe. Bevorzugt umfasst das Mikroskop ein 20- bis 60-fach Objektiv. Dies hat den Vorteil, dass die Vergrößerung so angepasst werden kann, dass die aufgekugelten roten Blutzellen mit einer Fokuseinstellung hinreichend scharf abgebildet werden können. In einer weiteren bevorzugten Ausführungsform des Analyzers wird eine sich in der Analysezelle befindende Zelle einer medizinischen Probe mittels akustischer Kräfte in den Fokusberiech des Mikroskops gebracht und/oder gehalten, wobei die akustischen Kräfte mittels des Piezoelements erzeugt werden. Bevorzugt beträgt die hierfür angelegte Spannung 8 bis 12 Volt und die Frequenz etwa 1 MHz, bevorzugt 1,113 MHz, oder etwa 5 MHz, bevorzugt 5,397 MHz. Dies hat den Vorteil, dass die Zelle berührungslos in den Fokusbereich gebracht bzw. gehalten werden kann. Gleichzeitig kommt es zu keiner Erwärmung der Zelle und dementsprechend zu keiner thermisch induzierten morphologischen Veränderung der Zelle wie sie bei höheren Spannungen auftritt. Die Zellen werden also nicht Kugelförmig sondern bleiben bikonkav.

Der Gegenstand der Erfindung ist ein Verfahren zum Aufkugeln einer Zelle einer medizinischen Probe mittels Erwärmung, wobei sich die Zelle in einer Analysezelle befindet und wobei mittels eines mit einer Spannung und einer Frequenz betriebenen Piezoelements ein akustisches Wellenfeld generiert wird und wobei sich die Zelle in dem Wellenfeld befindet und durch das Wellenfeld erwärmt und dadurch aufgekugelt wird.

In einer bevorzugten Ausgestaltung des Verfahrens erfolgt die Aufkugelung isovolumetrisch. Dies hat den Vorteil, dass das Zellvolumen z.B. der roten Blutzelle, durch die Aufkugelung unverändert erhalten bleibt. Dies kann für eine entsprechende quantitative, präzise Analyse des Zellvolumens von hoher Bedeutung sein.

Bei dem erfindungsgemäßen Verfahren wird die Zelle auf mindestens 48 Grad Celsius, besonders bevorzugt auf mindestens 50 Grad Celsius erwärmt wird. Dies hat den Vorteil, dass zuverlässig eine vollständige Aufkugelung von roten Blutzellen erreicht werden kann.

In einer weiteren bevorzugten Ausgestaltung des Verfahrens bewegt sich die Zelle in der Analysezelle mit einer Durchflussgeschwindigkeit zwischen 0,002 und 5 mm pro Sekunde, besonders bevorzugt zwischen 0,002 und 0,01 mm pro Sekunde.

Bei dem erfindungsgemäßen Verfahren wird die Zelle nach der Aufkugelung mittels einer Analysevorrichtung, die ein optisches Mikroskop, bevorzugt ein digitales holographisches Mikroskop (DHM) umfasst, analysiert und/oder abgebildet, wobei sich die Zelle während der Analyse und/oder Abbildung bevorzugt in einem Fokusbereich des Mikroskops befindet. Dies hat den Vorteil, dass eine Abbildung der Zelle in hoher Qualität erfolgen kann und somit eine präzise, quantitative Analyse z.B. des Zellvolumens oder anderer Zellparameter erfolgen kann.

In einer weiteren bevorzugten Ausgestaltung des Verfahrens wird die Zelle in den Fokusberiech des Mikroskops durch akustische Kräfte gebracht und/oder gehalten, wobei dies bevorzugt zeitgleich mit der Aufkugelung der Zelle erfolgt.

In einer weiteren bevorzugten Ausgestaltung des Verfahrens wird die Zelle in den Fokusberiech des Mikroskops durch einen gleichzeitigen Einsatz von akustischen und mikrofluidischen Kräften gebracht und/oder gehalten, wobei dies bevorzugt zeitgleich mit der Aufkugelung der Zelle erfolgt.

Bevorzugt werden die akustischen Kräfte um die Zelle in den Fokusberiech des Mikroskops zu bringen und/oder zu halten mittels des Piezoelements erzeugt. Bevorzugt beträgt die hierfür angelegte Spannung 8 bis 12 Volt und die Frequenz etwa 1 MHz, bevorzugt 1,113 MHz, oder etwa 5 MHz, bevorzugt 5,397 MHz.

In einer weiteren bevorzugten Ausgestaltung des Verfahrens erfolgt die Aufkugelung der Zelle innerhalb einer Durchflusszelle in einem ersten Bereich der Durchflusszelle, bevorzugt mittels einer angelegten Frequenz von 1 MHz, besonders bevorzugt 1,113 MHz an das Piezoelement. Bevorzugt befindet sich der erste Bereich der Durchflusszelle stromaufwärts des Fokusbereichs des Mikroskops. Der Fokusberiech des Mikroskops befindet sich in einem zweiten Bereich der Durchflusszelle, wobei der erste Bereich bevorzugt stromaufwärts des zweiten Bereichs angeordnet ist. Bevorzugt erfolgt die Anhebung der Zelle in den Fokusbereich des Mikroskops dann flussabwärts im zweiten Bereich der Durchflusszelle, bevorzugt mittels einer angelegten Frequenz von 5 MHz, besonders bevorzugt 5,397 MHz an das Piezoelement. Dies hat den Vorteil, dass eine Aufkugelung der Zelle ohne weitere unerwünschte thermisch induzierte weitere Veränderungen an der Zelle auch dann möglich ist, wenn eine zeitgleiche Aufkugelung und Fokussierung solche unerwünschten Veränderungen nach sich ziehen würde und/oder solche Veränderungen nicht ausgeschlossen werden könnten.

Bei dem erfindungsgemäßen Verfahren wird die Zelle unmittelbar nach der Aufkugelung, bevorzugt innerhalb von 0,05 bis 1 Sekunde nach der Aufkugelung analysiert und/oder abgebildet. Dies hat den Vorteil, dass möglicherweise auftretende, unerwünschte Veränderungen der Zelle aufgrund der Erwärmung oder einer Überhitzung der Zelle erst zu einem Zeitpunkt eintreten, bei denen die Analyse und/oder die Abbildung der Zelle bereits abgeschlossen sind.

In einer weiteren bevorzugten Ausgestaltung des Verfahrens handelt es sich bei der Zelle um eine menschliche oder tierische Zellen, bevorzugt eine Blutzelle, besonders bevorzugt eine rote Blutzelle.

In einer weiteren bevorzugten Ausgestaltung des Verfahrens ist die Zelle eine rote Blutzelle und wobei die Analyse der Zelle eine Volumenbestimmung und/oder eine Bestimmung von Einzelzell-Hämoglobin (MCH) und/oder eine Detektion von Malaria Parasiten umfasst.

Ein weiterer Gegenstand der Erfindung ist eine Verwendung eines erfindungsgemäßen Verfahrens in einem automatischen Analyzer, bevorzugt in einem erfindungsgemäßen automatischen Analyzer.

Bevorzugt umfasst die medizinische Probe eine Zelle und/oder ein medizinisches Präparat. Bevorzugt handelt es sich bei dem medizinischen Präparat um einen Gewebeschnitt, Sedimente aus Körpersekreten und/oder Körperflüssigkeiten und/oder Mikrokristalle. Dies hat den Vorteil, dass verschiedenste Probentypen, einschließlich verschiedenster Zelltypten, untersucht und charakterisiert werden können.

**Die Erfindung wird anhand der beigefügten Zeichnung noch einmal durch ein konkretes Ausführungsbeispiel näher erläutert. Das gezeigte Beispiel stellt eine bevorzugte Ausführungsform der Erfindung dar. Es zeigen:**
- FIG 1: eine Analysezelle (9), in der sich rote Blutzellen (7) befinden ohne akustophoretisches Heizen, wobei ein Piezoelement (1) mit 23 Volt betrieben wird,
- FIG 2: eine Analysezelle (9), in der sich aufgekugelte rote Blutzellen (7) befinden mit akustophoretischem Heizen, wobei ein Piezoelement (1) mit 75 Volt betrieben wird,
- FIG 3: eine Analysezelle (9), in der sich rote Blutzellen (7) befinden, wobei ein Piezoelement (1) mit 23 Volt betrieben wird,
- FIG 4: eine Analysezelle (9), in der sich aufgekugelte rote Blutzellen (7) befinden, wobei ein Piezoelement (1) mit 75 Volt betrieben wird.

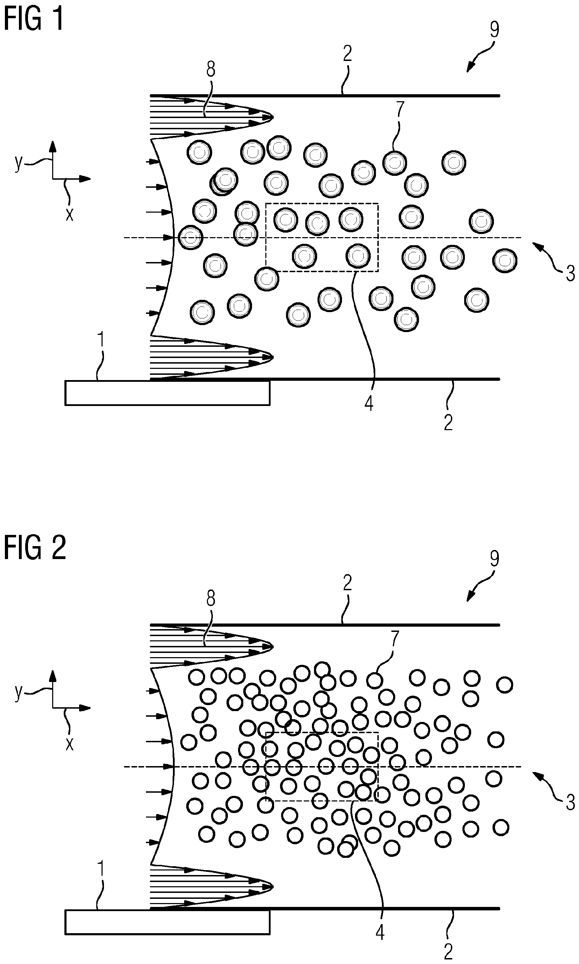

Die in FIG 1 gezeigte Analysezelle (9) umfasst Kanalwände (2) und ein Piezoelement (1) und ist Teil eines automatischen Analyzers zum Analysieren von Zellen in einer Probe. Der Analyzer umfasst eine Analysevorrichtung (10), die als optisches Mikroskop ausgestaltet ist und eine Lichtquelle zum Beleuchten einer Probe in der Analysezelle (9) und eine Sammellinse zum Sammeln und Fokussieren von Lichtstrahlen umfasst, die von der beleuchteten Probe ausgehen. Bei der Probe handelt es sich um eine Blutprobe, die rote Blutzellen (7) enthält. Die Probe befindet sich in der Analysezelle (9), die als mikrofluidische Durchflusszelle ausgestaltet ist. Weiter umfasst das Mikroskop eine Kamera umfassend ein digitales Aufzeichnungsgerät, das Aufzeichnungsgerät umfassend einen CCD Chip oder einen CMOS Chip, zum Aufnehmen des im Mikroskop abgebildeten Lichtfelds. Die Analysezelle (9) und das Mikroskop sind so ausgestaltet, dass rote Blutzellen (7), die sich in einem optischen Fenster (4) befinden, abgebildet und analysiert werden können. Das Piezoelement (1) ist im äußeren Bereich an der Kanalwand (2) unmittelbar vor dem optischen Fenster (4) in Flussrichtung x der roten Blutzellen (7) angeordnet. Ein Geschwindigkeitsprofil (8) der roten Blutzellen (7), die sich in Richtung x bewegen innerhalb der Durchflusszelle ist vektoriell dargestellt in Abhängigkeit der Position der roten Blutzellen in Richtung y.

Das Piezoelement (1) wird mit einer Spannung von 25 Volt und einer Frequenz von etwa 1 MHz, bevorzugt 1,113 MHz, oder mit einer Spannung von 25 Volt und einer Frequenz von etwa 5 MHz, bevorzugt 5,397 MHz betrieben Die Temperatur der roten Blutzellen (7) beträgt weniger als 48 Grad Celsius und die roten Blutzellen (7) befinden sich in ihrem nativen Zustand und sind nicht aufgekugelt.

In FIG 2 ist die gleiche Analysezelle (9) wie in FIG 1 gezeigt. Nun wird das Piezoelement (1) mit einer Spannung von 75 Volt und einer Frequenz von etwa 1 MHz, bevorzugt 1,113 MHz, oder mit einer Spannung von 75 Volt und einer Frequenz von etwa 5 MHz, bevorzugen 5,397 MHz betrieben. Die Temperatur der roten Blutzellen (7) beträgt mindestens 48 Grad Celsius und die roten Blutzellen (7) sind aufgekugelt.

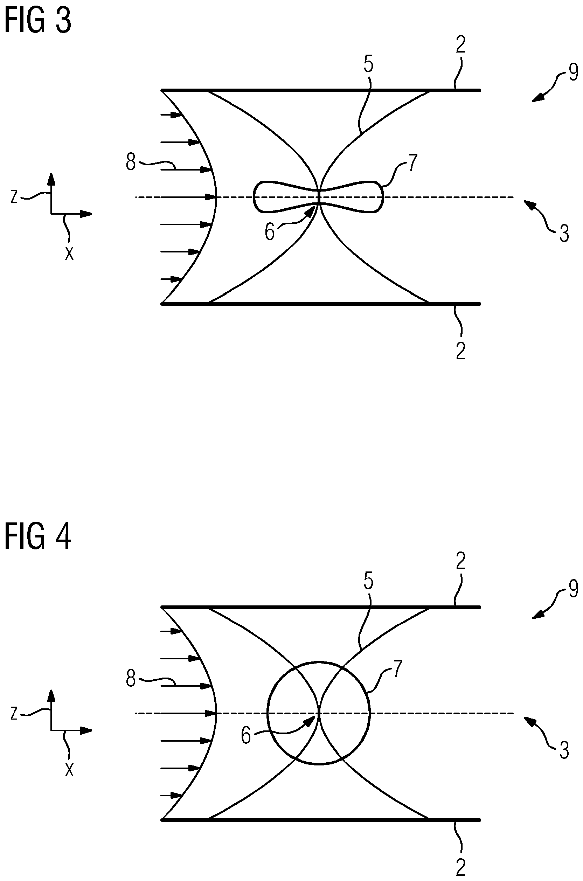

In FIG 3 ist eine weitere Analysezelle (9) gezeigt, in der sich eine rote Blutzelle (7) befindet. Ein Geschwindigkeitsprofil (8) der roten Blutzellen (7), die sich in Richtung x bewegen innerhalb der Durchflusszelle ist vektoriell dargestellt in Abhängigkeit der Position der roten Blutzellen in Richtung z. Ein nicht gezeigtes Piezoelement (1) ist im Bereich der äußeren Seite der Kanalwand angeordnet und wird mit einer Spannung von 23 Volt und einer Frequenz von etwa 1 MHz, bevorzugt 1,113 MHz, oder mit einer Spannung von 23 Volt und einer Frequenz von etwa 5 MHz, bevorzugt 5,397 MHz betrieben. Die Temperatur der roten Blutzellen (7) beträgt 36 Grad Celsius und die rote Blutzelle (7) befinden sich in ihrem nativen Zustand und ist nicht aufgekugelt. Gezeigt ist der Verlauf der akustischen Welle (5), die durch das Piezoelement (1) erzeugt wird. Ein akustischer Wellenknoten (6) befindet sich im Bereich der halben Kanalhöhe (3) und der roten Blutzelle (7). Die rote Blutzelle (7) wird durch akustische Kräfte in den Bereich des akustischen Wellenknotens gezogen und dort gehalten.

In FIG 4 ist die gleiche Analysezelle (9) wie in FIG 3 gezeigt. Das Piezoelement (1) wird mit einer Spannung von 75 Volt und einer Frequenz von etwa 1 MHz, bevorzugt 1,113 MHz, oder mit einer Spannung von 75 Volt und einer Frequenz von etwa 5 MHz, bevorzugt 5,397 MHz betrieben. Die Temperatur der roten Blutzelle (7) beträgt 48 Grad Celsius und die rote Blutzelle (7) ist vollständig aufgekugelt. Gezeigt ist der Verlauf der akustischen Welle (5), die durch das Piezoelement (1) erzeugt wird. Ein akustischer Wellenknoten (6) befindet sich im Bereich der halben Kanalhöhe (3) und der roten Blutzelle (7). Die rote Blutzelle (7) wird durch akustische Kräfte in den Bereich des akustischen Wellenknotens gezogen und dort gehalten.

### Bezugszeichenliste

- 1: Piezoelement
- 2: Kanalwand
- 3: Halbe Kanalbreite
- 4: Optisches Fenster
- 5: Akustische Welle
- 6: Akustischer Wellenknoten
- 7: Rote Blutzelle (RBC)
- 8: Geschwindigkeitsprofil
- 9: Analysezelle

## Patentansprüche

1. Verfahren zum Aufkugeln einer Zelle einer medizinischen Probe mittels Erwärmung in einem automatischen Analyzer zum Analysieren einer medizinischen Probe, die Probe umfassend eine Zelle, der Analyzer umfassend eine Analysezelle (9) für die Probe, wobei es sich bei der Analysezelle (9) um eine mikrofluidische Durchflusszelle handelt, ein Piezoelement (1) und eine Analysevorrichtung, wobei das Piezoelement (1) durch Anlegen einer Spannung und einer Frequenz betrieben werden kann und dabei ein akustisches Wellenfeld generiert, wobei eine sich in der Analysezelle (9) befindende Probe bei Betrieb des Piezoelements (1) in dem akustischen Wellenfeld befindet und durch das Wellenfeld auf mindestens 48 Grad Celsius, besonders bevorzugt auf mindestens 50 Grad Celsius erwärmt wird, wobei sich die Zelle in der Analysezelle (9) befindet, und wobei mittels des mit einer Spannung und einer Frequenz betriebenen Piezoelements (1) ein akustisches Wellenfeld generiert wird und wobei sich die Zelle in dem Wellenfeld befindet und durch das Wellenfeld auf mindestens 48 Grad Celsius, besonders bevorzugt auf mindestens 50 Grad Celsius erwärmt und dadurch aufgekugelt wird, wobei die Zelle nach der Aufkugelung mittels der Analysevorrichtung, die ein optisches Mikroskop umfasst, analysiert und/oder abgebildet wird, wobei die Zelle unmittelbar nach der Aufkugelung, bevorzugt innerhalb von 0,05 bis 1 Sekunde nach der Aufkugelung analysiert und/oder abgebildet wird.

2. Verfahren nach Anspruch 1, wobei das Mikroskop ein 20- bis 60-fach Objektiv umfasst.

3. Verfahren nach einem der vorhergehenden Ansprüche, wobei die Probe menschliche oder tierische Zellen, bevorzugt Blutzellen, besonders bevorzugt rote Blutzellen (7) umfasst.

4. Verfahren nach einem der vorhergehenden Ansprüche, wobei die Aufkugelung isovolumetrisch erfolgt.

5. Verfahren nach einem der vorhergehenden Ansprüche,
wobei sich die Zelle in der Analysezelle (9) mit einer Durchflussgeschwindigkeit zwischen 0,002 und 5 mm pro Sekunde, besonders bevorzugt zwischen 0,002 und 0,1 mm pro Sekunde bewegt.

6. Verfahren nach einem der vorhergehenden Ansprüche, wobei die Analysevorrichtungein digitales holographisches Mikroskop (DHM) umfasst, wobei sich die Zelle während der Analyse und/oder Abbildung bevorzugt in einem Fokusbereich des Mikroskops befindet.

7. Verfahren nach einem der vorhergehenden Ansprüche, wobei die Zelle in den Fokusberiech des Mikroskops durch einen gleichzeitigen Einsatz von akustischen und mikrofluidischen Kräften gebracht und/oder gehalten wird, wobei dies bevorzugt zeitgleich mit der Aufkugelung der Zelle erfolgt.

8. Verfahren nach einem der Ansprüche 3 bis 7, wobei die Zelle eine menschliche oder tierische Zellen ist, bevorzugt eine Blutzelle, besonders bevorzugt eine rote Blutzelle (7).

9. Verfahren nach einem der Ansprüche 3 bis 8, wobei die Zelle eine rote Blutzelle (7) ist und wobei die Analyse der Zelle eine Volumenbestimmung und/oder eine Bestimmung von Einzelzell-Hämoglobin (MCH) und/oder eine Detektion von Malaria Parasiten umfasst.

## Claims

1. Method for sphering a cell of a medical sample by means of heating in an automatic analyser for analysing a medical sample, the sample comprising a cell, the analyser comprising an analysis cell (9) for the sample, wherein the analysis cell (9) is a microfluidic flow cell, a piezo element (1) and an analysis device, wherein the piezo element (1) can be operated by application of a voltage and a frequency and generates an acoustic wave field, wherein a sample situated in the analysis cell (9) is situated in the acoustic wave field during operation of the piezo element (1) and is heated by the wave field to at least 48 degrees Celsius, particularly preferably to at least 50 degrees Celsius, wherein the cell is situated in the analysis cell (9), and wherein an acoustic wave field is generated by means of the piezo element (1) operated at a voltage and a frequency and wherein the cell is situated in the wave field and is heated by the wave field to at least 48 degrees Celsius, particularly preferably to at least 50 degrees Celsius, and thereby sphered, wherein the cell is analyzed and/or imaged by means of the analysis device comprising an optical microscope after the sphering, wherein the cell is analyzed and/or imaged immediately after the sphering, preferably within 0.05 to 1 second after the sphering.

2. Method according to Claim 1, wherein the microscope comprises a 20x to 60x objective.

3. Method according to either of the preceding claims, wherein the sample comprises human or animal cells, preferably blood cells, particularly preferably red blood cells (7).

4. Method according to any of the preceding claims, wherein the sphering is done isovolumetrically.

5. Method according to any of the preceding claims, wherein the sample moves within the analysis cell (9) at a flow rate between 0.002 and 5 mm per second, particularly preferably between 0.002 and 0.1 mm per second.

6. Method according to any of the preceding claims, wherein the analysis device comprises a digital holographic microscope (DHM), wherein the cell is preferably situated in a focus region of the microscope during the analysis and/or imaging.

7. Method according to any of the preceding claims, wherein the cell is brought into and/or held in the focus region of the microscope by simultaneous use of acoustic and microfluidic forces, wherein this is preferably done at the same time as the sphering of the cell.

8. Method according to any of Claims 3 to 7, wherein the cell is a human or animal cell, preferably a blood cell, particularly preferably a red blood cell (7).

9. Method according to any of Claims 3 to 8, wherein the cell is a red blood cell (7) and wherein the analysis of the cell comprises a volume determination and/or a determination of single-cell haemoglobin (MCH) and/or a detection of malaria parasites.

## Revendications

1. Procédé pour embiller une cellule d'un échantillon médical par chauffage dans un analyseur automatique pour analyser un échantillon médical, l'échantillon comportant une cellule, l'analyseur comportant une cellule (9) d'analyse pour l'échantillon, dans lequel la cellule (9) d'analyse est une cellule d'écoulement microfluidique, un élément (1) piézo et un dispositif d'analyse, dans lequel l'élément (1) piézo peut être mis en fonctionnement par application d'une tension et d'une fréquence et ainsi produire un champ d'ondes acoustiques, dans lequel un échantillon se trouvant dans la cellule (9) d'analyse lors du fonctionnement de l'élément (1) piézo se trouve dans le champ d'ondes acoustiques et est réchauffé par le champ d'ondes à au moins 48 degrés Celsius, notamment de préférence à au moins 50 degrés Celsius, dans lequel la cellule se trouve dans la cellule (9) d'analyse, et dans lequel, au moyen de l'élément (1) piézo mis en fonctionnement avec une tension et une fréquence, il est produit un champ d'ondes acoustiques, et dans lequel la cellule se trouve dans le champ d'ondes et par l'intermédiaire du champ d'ondes est réchauffée à au moins 48 degrés Celsius, notamment de préférence à au moins 50 degrés Celsius et est ainsi embillée, dans lequel la cellule, après l'embillage au moyen du dispositif d'analyse, qui comporte un microscope optique, est analysée et/ou mise en image, dans lequel la cellule, directement après l'embillage, de préférence entre 0,05 et 1 seconde après l'embillage, est analysée et/ou mise en image.

2. Procédé suivant la revendication 1, dans lequel le microscope comporte un objectif fois 20 à fois 60.

3. Procédé suivant l'une des revendications précédentes, dans lequel l'échantillon comporte des cellules humaines ou animales, de préférence des cellules sanguines, notamment de préférence des cellules (7) sanguines rouges.

4. Procédé suivant l'une des revendications précédentes, dans lequel l'embillage a lieu de manière isovolumétrique.

5. Procédé suivant l'une des revendications précédentes, dans lequel la cellule dans la cellule (9) d'analyse se déplace à une vitesse d'écoulement comprise entre 0,002 et 5 mm/s, notamment de préférence comprise entre 0,002 et 0,1 mm/s.

6. Procédé suivant l'une des revendications précédentes, dans lequel le dispositif d'analyse comporte un microscope holographique numérique (DHM), dans lequel la cellule se trouve, pendant l'analyse et/ou la mise en image, de préférence dans une région focale du microscope.

7. Procédé suivant l'une des revendications précédentes, dans lequel la cellule est apportée et/ou maintenue dans la région focale du microscope par l'utilisation simultanée de forces acoustiques et microfluidiques, dans lequel cela s'effectue de préférence de manière simultanée à l'embillage de la cellule.

8. Procédé suivant l'une des revendications 3 à 7, dans lequel la cellule est une cellule humaine ou animale, de préférence une cellule sanguine, notamment de préférence une cellule (7) sanguine rouge.

9. Procédé suivant l'une des revendications 3 à 8, dans lequel la cellule est une cellule (7) sanguine rouge et dans lequel l'analyse de la cellule comporte une détermination de volume et/ou une détermination d'hémoglobine de cellule unitaire (MCH) et/ou une détection de parasites de la malaria.
